Europäisches Patentamt

(19) European Patent Office

Office européen des brevets

(11) Numéro de publication : **0 046 093 B1**

(12) # FASCICULE DE BREVET EUROPÉEN

(45) Date de publication du fascicule du brevet :
23.05.84

(51) Int. Cl.³ : **B 60 Q   1/06**

(21) Numéro de dépôt : **81400965.0**

(22) Date de dépôt : **17.06.81**

(54) **Dispositif de basculement des projecteurs d'un véhicule automobile.**

(30) Priorité : **13.08.80 FR 8017812**

(43) Date de publication de la demande :
**17.02.82 Bulletin 82/07**

(45) Mention de la délivrance du brevet :
**23.05.84 Bulletin 84/21**

(84) Etats contractants désignés :
**DE GB IT**

(56) Documents cités :
**FR-A-   743 215**
**FR-A-   816 188**
**FR-A- 2 265 577**
**US-A- 1 812 935**

(73) Titulaire : **DUCELLIER & Cie**
**Echat 950**
**F-94024 Créteil Cedex (FR)**

(72) Inventeur : **Lyzbinski, Jean**
**4 Sente des Pressoirs**
**F-94470 Boissy Saint Leger (FR)**

(74) Mandataire : **Habert, Roger**
**DUCELLIER & Cie 2, rue Boulle Echat 950**
**F-94024 Créteil Cedex (FR)**

Jouve, 18, rue St-Denis, 75001 Paris, France

## Description

La présente invention concerne un dispositif de basculement des projecteurs d'un véhicule automobile, notamment en fonction de la charge du véhicule et dont la commande motorisée peut être elle-même commandée manuellement ou non.

Il est connu de tels systèmes motorisés dans lesquels chaque projecteur comporte un moteur associé. Il en résulte un prix de revient élevé pour la paire de projecteurs.

D'autres systèmes connus, notamment par le brevet FR-A-22 65 577, comportent un entraînement unique pour les deux projecteurs, qui agit sur une transmission à câbles ou à tringlerie. Ces systèmes sont constitués d'une pluralité telle de petits éléments du type : entraînement, liaison, rappel, articulation, qui sont à la fois bruyants, peu économiques et parfois assez lourds.

La présente invention a pour but de réaliser un dispositif léger avec un minimum d'éléments. Par rapport au dispositif connu de basculement des projecteurs pour véhicule automobile à partir d'une commande motorisée qui agit sur les deux projecteurs par l'intermédiaire d'organes de transmission, le dispositif selon l'invention est caractérisé en ce que les organes de transmission comprennent une courroie unique perforée dont les trous coopèrent d'une part avec les dents d'une roue menante solidaire de l'arbre rotatif d'un moteur unique et d'autre part avec les dents de deux roues dentées menées, lesdites roues dentées menées étant maintenues dans leur support axialement et radialement dans un plan horizontal et comportant chacune une vis axiale tournant dans un écrou solidaire du réflecteur de chaque projecteur correspondant.

La description qui va suivre en regard des schémas annexés fera mieux comprendre comment l'invention peut être réalisée.

La figure 1 représente en vue de dessus un dispositif conforme à l'invention dépouillé des différentes tôles de fixation.

La figure 2 représente en vue frontale ledit dispositif.

La figure 3 représente, suivant la coupe III-III de la figure 1 la liaison entre ledit dispositif et un projecteur.

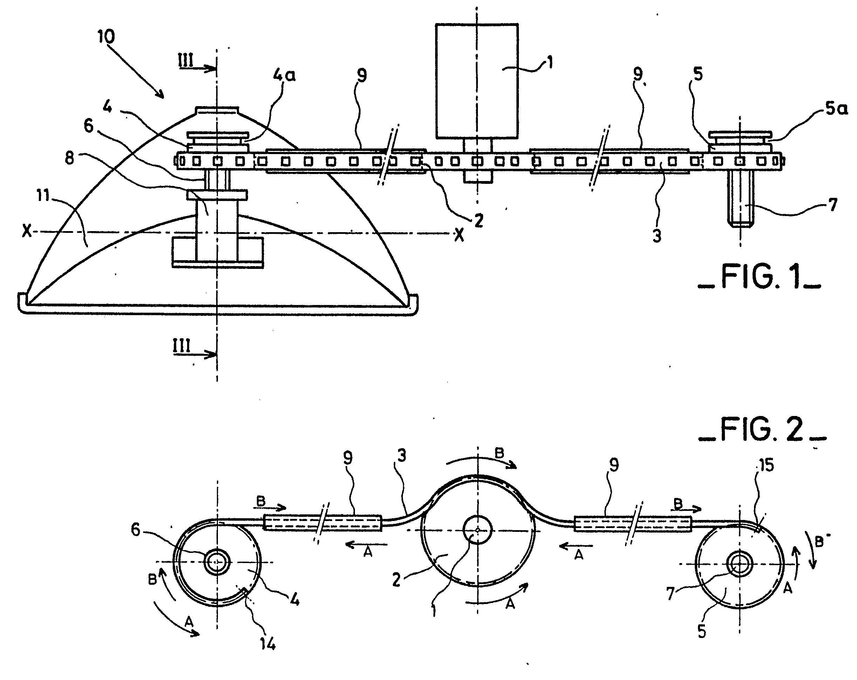

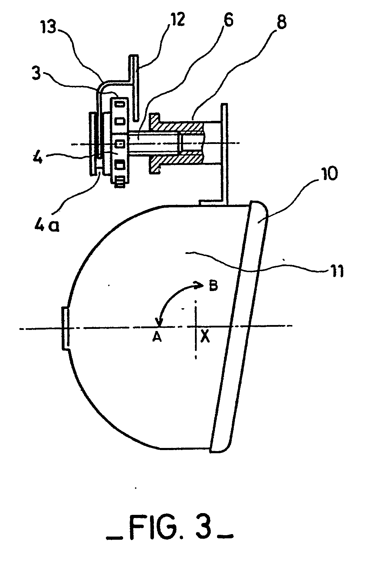

Dans ce dispositif les projecteurs 10 sont orientables et maintenus dans leur support, de façon connue, de manière à ce que : soit l'ensemble de chaque projecteur 10, soit uniquement leur réflecteur 11 puisse basculer autour d'un axe XX (voir figure 1) suivant les sens A et B indiqués à la figure 3.

Conformément à l'invention le dispositif qui assure ce basculement est constitué des éléments tels que décrits ci-après.

Un moteur 1 est maintenu sur une platine 12 solidaire du véhicule, qui peut avantageusement être le support des projecteurs 10. Ce moteur 1 comporte en bout d'arbre une roue dentée 2 dont les dents s'engagent dans les trous d'une courroie perforée 3. Cette courroie 3 se présente sous la forme d'une bande plastique perforée dont la rigidité est améliorée à l'aide de rails de guidage 9 disposés de part et d'autre de la roue dentée 2.

A une de ses extrémités 14, la courroie 3 est fixée sur la périphérie d'une roue dentée 4, et à l'autre extrémité 15 sur la périphérie d'une roue dentée 5, les dents de ces roues dentées 4 et 5 s'engageant aussi dans les trous de la courroie 3.

Chaque roue dentée 4 et 5 comporte une vis axiale 6 et 7 qui coopère avec un écrou 8 solidaire du réflecteur 11 de chaque projecteur 10. Le maintien axial et radial, dans un plan horizontal des roues dentées dans leur support est effectué à l'aide d'une gorge 4a ou 5a, réalisée dans le prolongement du moyeu de la roue dentée considérée, ladite gorge coopérant avec une encoche réalisée dans une plaque de protection 13 qui peut être formée : soit par une platine 12 supportant le moteur, la courroie et les trois roues dentées, soit par une pièce rendue solidaire de ladite platine support.

Le fonctionnement d'un tel dispositif est alors le suivant : le réflecteur 11 est initialement réglé au montage de façon connue suivant une position correspondant au véhicule équipé à vide. Suivant la charge du véhicule il est nécessaire de faire basculer les projecteurs de façon à rabattre leurs faisceaux lumineux qui se trouvent relevés par rapport à leur bonne inclinaison. Pour cela le conducteur du véhicule peut agir sur le moteur 1 de façon connue, ne faisant pas partie de l'invention. Le moteur 1 entraîne dans le sens B des aiguilles d'une montre la roue dentée 2 dont les dents s'accrochent dans la courroie 3 qui entraîne la roue dentée 4 en tirant alors qu'elle entraîne la roue dentée 5 en poussant, entraînant ainsi les deux roues dentées 4 et 5 en rotation dans le sens B des aiguilles d'une montre.

Les vis 6 et 7 solidaires des roues 4 et 5 tournent alors dans le sens de leur dévissage dans l'écrou 8 solidaire du réflecteur 11, et, étant maintenues axialement, elles assurent une poussée sur ledit écrou 8 lui-même assurant le basculement du réflecteur 11 vers le bas, par des moyens connus.

Dans le cas d'une réutilisation à vide du véhicule, le processus inverse se produit, le moteur étant à double sens de rotation et actionné dans le sens A, inverse de B.

Dans un tel dispositif des ressorts de rappel du niveau de la courroie sont inutiles, celle-ci étant assez rigide pour pousser sur les roues dentées et assez souple pour s'enrouler autour des roues dentées. De plus l'utilisation d'une courroie unique assure un basculement identique pour les deux projecteurs.

Il est évident que des modifications pourront être apportées à une telle réalisation sans sortir pour cela du cadre de l'invention, par exemple en rendant les extrémités libres de la courroie 3 jointives, c'est-à-dire en fermant le circuit de la courroie sur elle-même.

## Revendications

1. Dispositif de basculement des projecteurs pour véhicule automobile à partir d'une commande motorisée (1) qui agit sur les deux projecteurs (10) par l'intermédiaire d'organes de transmission, caractérisé en ce que les organes de transmission comprennent une courroie unique perforée (3) dont les trous coopèrent d'une part avec les dents d'une roue menante (2) solidaire de l'arbre rotatif d'un moteur unique (1) et d'autre part avec les dents de deux roues dentées menées (4, 5), lesdites roues dentées menées (4, 5) étant maintenues dans leur support axialement et radialement, dans un plan horizontal, et comportant chacune une vis (6, 7) axiale tournant dans un écrou (8) solidaire du réflecteur (11) de chaque projecteur (10) correspondant.

2. Dispositif selon la revendication 1 caractérisé en ce que le moteur (1), la courroie (3) et les trois roues dentées (2, 4, 5) sont montés sur une platine (12) elle-même fixée sur le châssis du véhicule automobile.

3. Dispositif selon les revendications 1 et 2 caractérisé en ce que les roues dentées menées (4, 5) sont maintenues au moyen d'une gorge (4a, 5a) pratiquée dans le moyeu de chaque roue dentée menée, et coopérant avec une plaque encochée (13) solidaire de la platine (12).

4. Dispositif selon la revendication 3 caractérisé en ce que la plaque (13) est formée par la platine (12) elle-même.

## Claims

1. A device for dipping the headlights of motor vehicles, operated from a motorised control system (1) which acts on the two headlights (10) via transmission members, characterised in that the transmission members comprise a single perforated belt (3) of which the holes cooperate on the one hand with the teeth of a driving sprocket (2) attached to the rotary spindle of a single motor (1), and on the other hand with the teeth of two driven sprockets (4, 5), the said driven sprockets (4, 5) being held axially and radially in their support, in a horizontal plane, and each comprising an axial screw (6, 7) turning within a nut (8) attached to the reflector (11) of each corresponding headlight (10).

2. Device according to claim 1, characterised in that the motor (1), the belt (3) and the three sprockets (2, 4, 5) are mounted on a plate (12) itself secured to the bodywork of the motor vehicle.

3. Device according to claim 1 and 2, characterised in that the driven sprockets (4, 5) are retained by means of a groove (4a, 5a) formed in the hub of each driven sprocket and cooperating with a notched plate (13) attached to the plate (12).

4. Device according to claim 3, characterised in that the notched plate (13) is formed by the plate (12) itself.

## Ansprüche

1. Vorrichtung zum Verschwenken der Scheinwerfer eines Kraftfahrzeuges mit einer motorisierten Steuerung (1) die mit Hilfe von Übertragungsorganen auf die beiden Scheinwerfer (10) einwirkt, dadurch gekennzeichnet, daß die Übertragungsorgane einen einzigen perforierten Riemen (3) umfassen, dessen Perforationslöcher einerseits mit den Zähnen eines mit der Drehwelle eines einzigen Motors (1) fest verbundenen Antriebsrades (2) und andererseits mit den Zähnen zweier angetriebener Zahnräder (4, 5) zusammenwirken, die in ihrem Lager axial und radial in einer horizontalen Ebene gehalten sind und von denen jedes eine axiale Schnecke (6, 7) besitzt, welche sich in einer mit dem Reflektor (11) jeweils eines zugeordneten Scheinwerfers (10) fest verbundenen Mutter (8) dreht.

2. Vorrichtung nach Anspruch 1, dadurch gekennzeichnet, daß der Motor (1), der Riemen (3) und die drei Zahnräder (2, 4, 5) auf einer Platine (12) montiert sind, die ihrerseits an dem Chassis des Kraftfahrzeuges befestigt ist.

3. Vorrichtung nach Anspruch 1 und 2, dadurch gekennzeichnet, daß die angetriebenen Zahnräder (4, 5) mittels einer in ihrer Mitte angebrachten Kehle (4a, 5a) gehalten sind, die mit einer eine Aussparung aufweisenden Platte (13) zusammenwirkt, welche mit der Platine (12) fest verbunden ist.

4. Vorrichtung nach Anspruch 3, dadurch gekennzeichnet, daß die Platte (13) von der Platine (12) selbst gebildet wird.

_FIG.1_

_FIG.2_

0 046 093

_FIG. 3_